# EUROPEAN PATENT APPLICATION

(11) **EP 2 016 986 A1**
(43) Date of publication of application: **21.01.2009**
(21) Application number: 08252379.6
(22) Date of filing: 11.07.2008
(51) Int. Cl.: B01D 19/00, B01D 61/00, B01D 63/00

(54) **Membrane based deoxygenator for processing fluids**

(30) Priority: 20.07.2007 US 780805
(71) Applicant: United Technologies Corporation, Hartford, CT 06101 (US)
(72) Inventor: Sloan, Michael A., West Hartford Connecticut 06107 (US)
(74) Representative: Leckey, David Herbert

(57) **Abstract**

A deoxygenating system includes a process fluid (12) that flows through a membrane deoxygenator (16). Oxygen is removed by the membrane deoxygenator (16) and stored in an oxygen storage container (34) separate from the subsequently deoxygenated processed fluid (36). In one example, the membrane deoxygenator (16) includes a membrane filter having an uneven surface for improved efficiency of the membrane deoxygenator. The processed fluid (36) can then be packaged without exposure to the removed oxygen and shipped offsite to customers (40) remote from the processing facility (13).

## Description

### BACKGROUND OF THE INVENTION

This application relates to a system and method of deoxygenating fluids. More particularly, the application relates to using a membrane-based deoxygenator for removing oxygen from process fluids.

Deoxygenators have been used to remove oxygen from various process fluids. In one example process, a membrane-based deoxygenator is used to remove oxygen from jet fuel so that a greater amount of heat can be rejected to the jet fuel without coking. The fuel is passed through a membrane deoxygenator, and the oxygen removed from the jet fuel is returned to a storage tank in which the jet fuel (which has been processed to reduce the oxygen content) is also contained.

One problem with the above process is that oxygen is returned to the container having the processed fluid. This is undesirable in that many processed fluids, such as foods and beverages, are adversely affected by the presence of oxygen thereby reducing their shelf life from oxidation. Moreover, the process is not adapted for subsequent processing or packaging of the processed fluid once the oxygen has been removed.

Membrane-based deoxygenators have been used to remove entrained oxygen in boiler and other water feed systems. However, once the dissolved oxygen has been removed its storage is not accounted for. Further, the deoxygenating process is not designed for packaging the processed fluid for customers remote from the deoxygenating facility.

What is needed is a method of removing oxygen from a processed fluid for improved subsequent processing of the processed fluid.

### SUMMARY OF THE INVENTION

A deoxygenating system includes a process fluid that flows through a membrane deoxygenator. Oxygen is removed by the membrane deoxygenator and stored in an oxygen storage container separate from the subsequently deoxygenated, processed fluid. In one example, the membrane deoxygenator includes a membrane filter having an uneven surface for improved efficiency of the membrane deoxygenator. The processed fluid can then be packaged without exposure to the removed oxygen and shipped offsite to customers remote from the processing facility.

These and other features of the application can be best understood from the following specification and drawings, the following of which is a brief description.

### BRIEF DESCRIPTION OF THE DRAWINGS

Figure 1 is a schematic view of an example deoxygenating system.
Figure 2 is an enlarged schematic view of a portion of a membrane deoxygenator.
Figure 3 is a schematic view of a portion of a deoxygenating system utilizing a heating process subsequent to deoxygenation of the process fluid.

### DETAILED DESCRIPTION OF THE PREFERRED EMBODIMENT

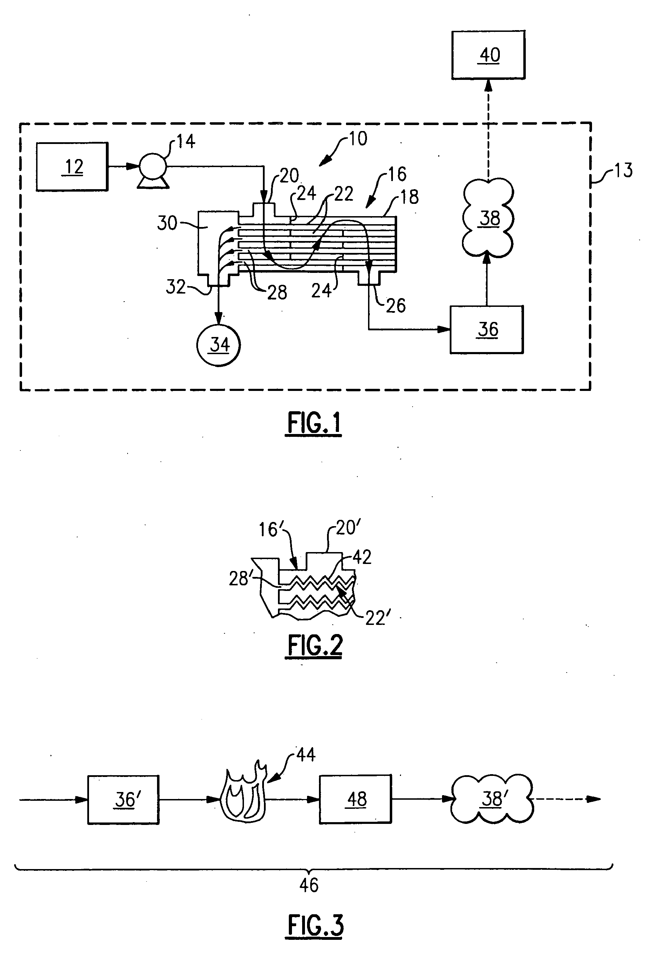

A deoxygenating system 10 is shown schematically in Figure 1. The deoxygenating system 10 is located at a processing facility 13. A process fluid 12 is processed by the deoxygenating system 10 to remove oxygen from the process fluid 12. In one example, the process fluid 12 is a food, such as those in a liquefied state, or beverage. However, it should be understood that the process fluid 12 can be any fluid in need of oxygen removal.

The process fluid 12 is pumped to a membrane deoxygenator 16 using a pump 14. One example membrane deoxygenator is disclosed in U.S. Patent No. 6,315,815 incorporated herein by reference. In one example, the membrane deoxygenator 16 includes a housing 18 providing an inlet 20 receiving the process fluid 12. A membrane filter 22 is arranged within the housing 18 for removing oxygen from the process fluid 12. In one example, tubes 28 providing passages extend within the housing 18. The tubes 28 are provided by the membrane filter 22. Baffles 24 create a tortuous path through which the process fluid 12 flows to increase oxygen removal.

The process fluid 12 flows through the membrane filter 22, which removes oxygen. The tubes 28 receive the oxygen, which is communicated to a chamber 30. Oxygen within the chamber 30 flows through an oxygen outlet 32 and into an oxygen storage container 34, which keeps separate the oxygen from the process fluid 12. The deoxygenated fluid exits a fluid outlet 26 provided by the housing 18 to provide processed fluid 36 having a reduced amount of oxygen. The processed fluid 36 can be packaged 38 and shipped to the customer 40, which is remote from the processing facility 13, in the example shown. The processed fluid 36 is kept separate from the oxygen removed from the process fluid 12 and stored in the oxygen storage container 34. As a result, the processed fluid 36 is not exposed to the oxygen again, which is particularly desirable for food and beverages which degrade in the presence of oxygen. Many foods become saturated with dissolved oxygen during the manufacturing operations. This often occurs during mixing and cooking operations where the required agitation naturally enfolds ambient air into the product. This oxygen then usually participates in chemical and biological processes that lead to off flavors, color changes and phase separations. The entrained air also alters the appearance, density and viscosity of the product, sometimes leading to further product appearance, performance and processing problems.

One example membrane deoxygenator 16' is shown in Figure 2. The membrane deoxygenator 16' includes an inlet 20' providing process fluid to a membrane filter 22'. The membrane filter 22' includes an uneven surface 42, which improves the efficiency of the membrane deoxygenator 16' and reduces its size by a factor of 10 in one example. Oxygen removed from the process fluid 12 is received by the tubes 28', which are in communication with the membrane filter 22'.

Referring to Figure 3, a heating process 46 is schematically shown, which can be employed on the processed fluid 36' subsequent to oxygen removal, for example. The processed fluid 36' is exposed to a heater 44 to produce a heated fluid 48. Some fluids, such as petroleum products, can be processed more quickly and efficiently when heated. De-aerating dairy-based products before heating can eliminate undesired foaming. The heated fluid 48 may receive subsequent processing and is packaged 38' for shipment to the customer 40.

Although a preferred embodiment has been disclosed, a worker of ordinary skill in this art would recognize that certain modifications would come within the scope of the claims. For that reason, the following claims should be studied to determine their true scope and content.

## Claims

1. A method of deoxygenating a fluid comprising the steps of:
passing a process fluid (12) through a membrane deoxygenator (16; 16');
removing oxygen from the process fluid (12) to produce a processed fluid (36; 36'); and
storing the oxygen separately from the processed fluid (36; 36').

2. The method according to claim 1, comprising the steps of packaging the processed fluid (36; 36'), and shipping the packaged processed fluid to a customer (40) remote from a processing facility that includes the membrane deoxygenator (16; 16').

3. The method according to claim 1 or 2, comprising the step of heating the processed fluid (36; 36').

4. The method according to any preceding claim, comprising the step of passing the process fluid through a membrane filter (22') having an uneven surface (42).

5. A deoxygenating system comprising:
a membrane deoxygenator (16; 16') including a membrane filter (22');
a source of process fluid (12) in fluid communication with the membrane deoxygenator (16; 16');
a oxygen storage container (34) for receiving oxygen from the membrane deoxygenator (16; 16'); and
packaging for receiving the processed fluid (36; 36'), the packaging remote from the oxygen storage container (34).
